Europäisches Patentamt

(19) European Patent Office

Office européen des brevets

(11) Publication number: **0 078 258**

**B1**

(12) **EUROPEAN PATENT SPECIFICATION**

(45) Date of publication of patent specification: **06.08.86**

(21) Application number: **81901763.3**

(22) Date of filing: **04.05.81**

(86) International application number:
**PCT/US81/00589**

(87) International publication number:
**WO 82/03761 11.11.82 Gazette 82/27**

(51) Int. Cl.⁴: **A 61 C 5/04,** A 61 M 5/18,
H 05 B 3/00

(54) **SYRINGE FOR OBTURATION OF ROOT CANAL CAVITIES.**

(43) Date of publication of application:
**11.05.83 Bulletin 83/19**

(45) Publication of the grant of the patent:
**06.08.86 Bulletin 86/32**

(84) Designated Contracting States:
**CH DE FR GB LI SE**

(56) References cited:
**DE-A-2 543 192**
**DE-C- 672 313**
**FR-A-1 120 779**
**US-A-1 189 735**
**US-A-2 505 028**
**US-A-3 154 811**
**US-A-3 466 752**
**US-A-3 745 655**
**US-A-4 121 587**
**US-A-4 122 850**
**US-A-4 265 618**

**Chicago Dental Society Review, Volume 68,
Number 9, issued September 1975, Herbert
Berk, et al., The Endodontic Pressure Syringe,
Pages 21-23.**

(73) Proprietor: **SOLAR ENERGY TECHNOLOGY,
INC.
Civil Terminal Building L.G. Hanscom Field .
Bedford, MA 01730 (US)**

(72) Inventor: **HERSKOVITZ, Sheldon B.
88 Hammond Street
Acton, MA 02745 (US)**
Inventor: **MARLIN, Jay
80 Washington Street
Loeminster, MA 01453 (US)**
Inventor: **STIGLITZ, Martin R.
30 Woodpark Circle
Lexington, MA 02173 (US)**

(74) Representative: **Slight, Geoffrey Charles et al
Graham Watt & Co. Riverhead
Sevenoaks Kent TN13 2BN (GB)**

Courier Press, Leamington Spa, England.

EP 0 078 258 B1

## Description

Technical Field

This invention is in the field of syringes and more particularly relates to syringes adapted for extruding heated thermoplastic materials through a hollow needle to fill a root canal cavity.

Background

Presently, root canal cavities as well as other dental cavities are obturated by filling them with heated gutta-percha. Gutta-percha is a purified, coagulated, milky extrudate obtained from certain species of trees, and is defined as a transisomer of rubber. It becomes plastic at about 140°F (60°C), and will flow through hollow needles of the type used in dental syringes at around 230°F (110°C).

The method most commonly employed for filling dental cavities with gutta-percha is to apply small amounts of heated gutta-percha into the cavity with a hot probe and to compact the material within the cavity using a condensor. This is a very time consuming and tedious process, at best, however, and may, in some cases, not result in complete filling and sealing of the dental cavity.

Recently, it has been recognized that the application of injection molding principles to obturate root canal cavities with gutta-percha offers great promise. It has been demonstrated, for example, by researchers in the field of endodontics that gutta-percha can be used to obturate root canal cavities using injection molding principles. See Yee, F.S., Marlin, J., Krakow, A.P., and Gron, P.; "Three-Dimensional Obturation of the Root Canal Using Injection-Molded, Thermoplasticized Dental Gutta-Percha": *J. Endodontics, 3*; No. 5; May, 1977; pp 168—174. These experiments were performed in vitro, but their application in vito would seem possible if suitable equipment were available. In addition to achieving outstanding sealing of the cavities, the techniques offer potential advantages in their simplicity, reduction in time by skilled personnel, and reduction in the amount of manipulative procedures necessary for condensation of gutta-percha. Despite such promise, these techniques have not been widely accepted due to lack of suitable equipment, such as dental syringes, for carrying out such techniques.

There have been hypodermic needles and tools which have heated tips, of course. For example, Piper et al., in U.S. 3,698,394, disclose a surgical hypodermic needle wherein the tip of the needle is heated with an electric current passed through resistance wires within the needle adjacent to its tip. This needle is used to destroy blood vessels or tissues. Clearly, such a needle would be unsuitable for filling dental cavities, such as those formed in root canal work, since the heating wires and insulation surrounding the needle make it so bulky that it would be difficult to insert and manipulate into a root canal cavity.

French patent number 1,120,779 discloses an electrically heated syringe for filling surface dental cavities. However, this apparatus does not include a thin, elongated hollow needle of the type necessary to insert into root canal cavities and it is not used to inject the conventional root canal filling material gutta-percha. Gutta-percha is not readily plasticized. In fact, the problem of supplying sufficient heat to a small diameter hollow needle so that its entire length, including its tip, stays above the temperature at which the gutta-percha material being extruded is plastic is very difficult in view of the convection losses which occur along the needle. In applications such as obturation of root canal cavities, the needle requires a minimum length, often one inch (2.54 cm) or more, and it is difficult to maintain the required temperature along the entire length of such needles.

Thus, despite great promise, injection molding principles have not been widely accepted by the dental profession for obturating root canal cavities. This is principally due to the lack of adequate equipment for applying such principles to this problem.

Disclosure of the Invention

This invention relates to a syringe which is uniquely designed to allow the extrusion of heated thermoplastic materials through hollow needles.

This syringe has a chamber means for holding a supply of thermoplastic material, such as a relatively elongated, hollow syringe barrel. A hollow needle through which the thermoplastic material is to be ejected is fabricated from material having a relatively high thermal conductivity which insures that sufficient heat flows along the needle to maintain it at a temperature above the point at which the thermoplastic material will flow, despite convection or other losses. The needle is joined to the chamber means by suitable means for joining such as a needle hub. Preferably, the needle hub is also fabricated from a material having high thermal conductivity. Means for advancing the thermoplastic material from the chamber means through the hollow needle are provided, and commonly are a piston located within the hollow syringe barrel.

Finally, means for heating the thermoplastic material and needle to temperatures sufficient to allow the thermoplastic material to flow through the needle are provided. Such means may be, for example, a separate heater section inserted in the assembly between the needle hub and the syringe cylinder. A suitable heater can be formed from a hollow tube fabricated from material having a relatively high thermal conductivity and wrapped with electrical resistance heating wires over which thermal insulation is provided.

The syringe of this invention allows the outstanding promise offered by injection molding techniques to be realized in obturating dental cavities with gutta-percha or other thermoplastic materials. Such promise is realized because the syringe is uniquely designed to maintain the needle at a temperature above the plastic point of the thermoplastic material along its entire length to insure that the thermoplastic material is maintained and extruded in a plastic state. Because of this, the thermoplastic material flows within the dental cavity and conforms to the dimensions of the cavity insuring that outstanding obturation is obtained.

Additionally, this syringe has self-contained heating elements and does not depend upon an external source of heat, such as the hot baths sometimes employed in prior attempts to heat syringes. These self-contained heating elements are sufficient, however, to rapidly heat the thermoplastic material to a temperature above its plastic point which reduces the amount of time required to complete introduction of the material into the cavity. Such rapid heating is possible because of the outstanding thermal paths provided by the design described herein. Since the self-contained heating elements may be powered by a source also located within the syringe, there is also great flexibility in designing portable syringe models.

The syringe of this invention is also constructed so that it can be held without any requirement for special heat-insulating gloves, etc. Such heat-insulating gloves are, of course, cumbersome and tend to interfere with the freedom of movement which is necessary in obturating root canal cavities.

Thus, root canal cavities can be filled efficaciously, easily and quickly by employing syringes according to this invention and this has not been possible heretofor.

Brief Description of the Drawings

Fig. 1 is a perspective view illustrating one embodiment of a syringe according to this invention;

Fig. 2 is a cross-sectional view illustrating each of the components in the syringe of Fig. 1;

Fig. 3 is a cross-sectional view illustrating one internal heater design suitable for syringes of this invention; and

Fig. 4 is a cut-away side elevation view illustrating an alternative embodiment of a syringe according to this invention which is trigger operated.

Description of Preferred Embodiments

This invention will now be described further by reference to the Figures in more detail.

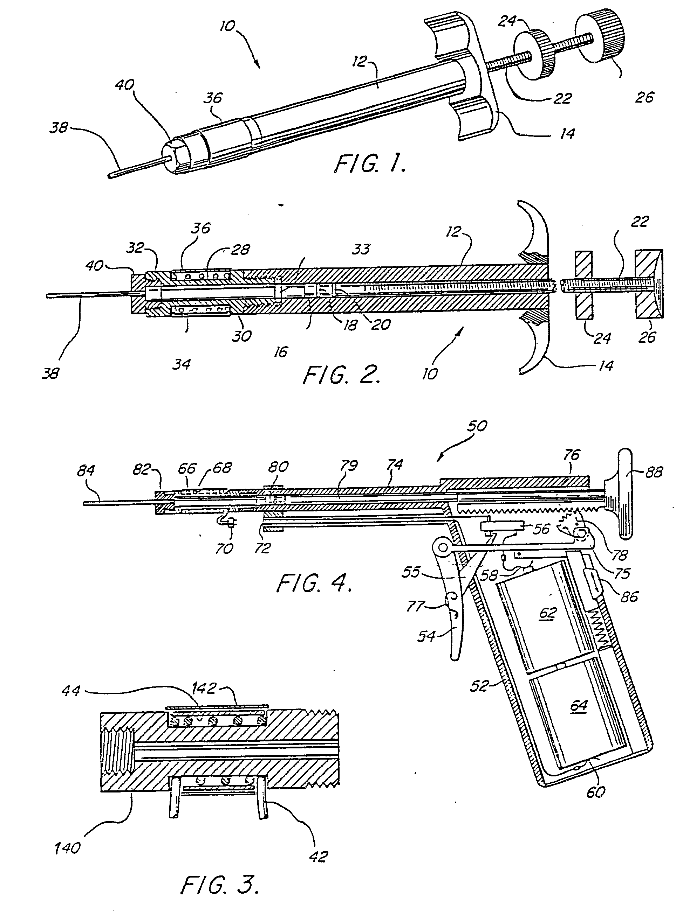

Figs. 1 and 2 illustrate one embodiment of a hand-operable syringe 10 according to this invention. Syringe 10 has a hollow cylinder or barrel 12 which is capable of holding an internal supply of thermoplastic material. Heft 14 is atached to barrel 12 to facilitate handling and operation of syringe 10.

Piston 16 is slidably engaged within the barrel 12 and serves to advance thermoplastic material through barrel 12. Piston 16 has two narrow grooves, 18 and 20, cut into its outer surface and extending around its entire periphery. Grooves 18 and 20 serve to catch and trap heated thermoplastic material flowing in the reverse direction, and act, therefore, as seals.

Elongated rod 22 is integrally attached to piston 16 and has a threaded portion extending from barrel 12 and beyond heft 14. A circular, internally threaded nut 24 is mounted on threaded rod 22. Circular nut 24 can be used to meter the extrusion of a predetermined amount of thermoplastic material by positioning it an appropriate distance from heft 14 and then advancing rod 22 until nut 24 meets heft 14. Thumb pad 26 is provided, of course, to receive thumb pressure to advance rod 22 and piston 16 as syringe 10 is held.

A wide range of materials can be used in fabricating the components of syringe 10 already described. It is preferred, however, that all of these components be fabricated from materials having relatively low thermal conductivity, such as those with a coefficient of thermal conductivity of below about 20 Btu(hr) (ft$^2$) (°F/ft), (0.448632 × 10$^6$ kW/(mK) to minimize heating of these components. In typical cases, barrel 12 might be constructed of stainless steel, glass or ceramics, heft 14 might be brass, and piston 16, rod 22, nut 24 and pad 26 might be constructed of stainless steel. Those skilled in the art will recognize, however, that many glass, ceramic, plastic, metal, or other materials will be suitable for each of these components.

A heater section for syringe 10 is positioned contiguous to barrel 12. The heater section has a tubular heater body 28 with raised flanges 30 and 32w at opposite sides thereof. Tubular heater body 28 has an inside diameter matching that of barrel 12. It is attached by an external thread on the part of body 28 extending beyond flange 30, which thread is matched to the internal thread at the terminal part of barrel 12. Heater body 28 is fabricated from a material having relatively good thermal conductivity, such as copper. As illustrated in Fig. 2, a washer 33, which can be formed from Teflon® or other heat-insulating materials, is used as a heat barrier between heater body 28 and syringe barrel 12.

Electrical resistance heating wire 34 is wound around tubular heater body 28 between raised flanges 30 and 32. Nichrome or German silver wire is suitable. A thermally insulating sleeve 36 is then slipped over wire 34 to provide an outer covering at much lower temperatures. Although not illustrated, heating wire 34 can be provided with power from an internal power source, such as batteries, or from an external source, such as a transformer connected to an a—c outlet.

Hollow needle 38 is used to deliver extruded heated thermoplastic material into the cavity beng filled. Typically, such needles useful in obturating root canal cavities have a needle gauge of from about 18 to about 30, and are about one inch (2.54 cm) or more in length. A convenient way to attach needle 38 is by using hub 40, which has an internal diameter matching that of syringe barrel 12 and also has an externally threaded portion which can be screwed tightly into flange 32 on heated body 28 thereby providing outstanding thermal contact therebetween. Needle 38 can be joined to hub 40 by swaging it into place and by using a silver braze which flows into any air space between needle 38 and hub 40; thus, excellent thermal contact is also achieved at this point.

Most commonly used materials, including most metals, are not sufficient for needle 38. Because it is an elongated tube which must be maintained at an elevated temperature along its entire length, only materials having a coefficient of thermal conductivity of greater than about 200 Btu/(hr) (ft$^2$) (°F/ft) ($4.48632 \times 10^6$ kW/(mK)) are suitable. Silver and copper are particularly preferred materials because of their high thermal conductivities and physiological inertness. Also, an 18 to 30 gauge silver or copper needle can be readily bent with one's fingers and can thus be termed manually malleable. This enables the endodontist to bend the needle before it is heated and thus shape the needle along its length so that it conforms to the root canal cavity.

A 30 gauge needle has an outer diameter (OD) of .012 inch (.30 mm), an inner diameter (ID) of .006 inch (.15 mm), and a wall thickness of .003 inch (.075 mm). An 18 gauge needle has an OD of 0.49 inch (1.2 mm), an ID of .033 inch (.85 mm), and a wall thickness of .008 inch (.20 mm).

Syringe 10 is operated as follows. Piston 16 is withdrawn from barrel 12 by grasping heft 14 and pulling pad 26 rearwardly. Thermoplastic material, such as a stick of gutta-percha, is then inserted into barrel 12 after which piston 16 is reinserted and moved in the forward direction until it contacts the thermoplastic material. The needle is then bent so that its shape conforms to that of the root canal cavity. The power supply for heating wire 34 is then activated to heat the thermoplastic material within heater body 28. The heater provides sufficient heat to heat the end of the needle 38 at the hub 40 to a temperature which is sufficient to maintain the entire length of the needle above about 230°F (110°C) at which the thermoplastic material will flow but below the temperature at which the material is thermally decomposed. After a short time, heated thermoplastic material can be extruded from the needle 38 by applying thumb pressure to pad 26 thereby advancing piston 16 in the forward direction. Circular nut 24 can be used as a metering indicator. The plastic extruded from the needle surrounds the needle as it fills the cavity. The plastic is thus kept soft by the heated needle as it flows into the cavity and complete filling of the cavity is assured. As the needle is then pulled from within the mass of thermoplastic material, extrusion of material is continued to fill the void left by the needle. After the desired amount of thermoplastic material has been extruded, the power supply is inactivated.

A modified heater section is illustrated in Fig. 3. Therein, it can be seen that the heater is formed from a tubular body section 140, fabricated from a metal or other material having high thermal conductivity. Tubular body section 140 might be formed, for example, from copper or silver. A recessed area is provided for wrapping the tubular heater section with electrical resistance wire 42. Heat insulating tape 44, or other insulating material, is placed over electrical resistance wire 42 and a radiation shield 142, such as aluminum foil, is added. This heater section is also provided with internal threads suitable for attachment to the external threads of a syringe barrel at one end, and external threads suitable for mating with the internal threads of a needle hub at the other end.

An alternative embodiment of a syringe according to this invention, which is trigger operated, is illustrated in Fig. 4. Trigger-operated syringe 50 has an outer housing 52 which contains most of the components of syringe 50. Syringe 50 delivers extruded heated thermoplastic material in response to finger pressure on trigger lever 54. As trigger 54 is depressed, activator lever 55 closes microswitch 56 completing the circuit formed by contacts 58 and 60, respectively, contacting the terminals of batteries 62 and 64. Thus, electrical current flows to heater coil 66. As in prior embodiments, heating coil 66 is wrapped around a recessed area of the tubular heater body 68. Heating coil 66 has a male electrical connector 70 which can be inserted into female electrical connector 72 mounted externally to barrel 74 of syringe 50. This provides a quick disconnect capability.

Depressing trigger lever 54 also simultaneously causes pawl rod 75 to advance thereby advancing ratchet rack 76 by means of spring-loaded pawl 78. Pawl 78 has a stop thereon, and after the stop is reached trigger lever 54 is released. Trigger spring 77 causes trigger 54 to return to its original position thereby allowing pawl 78 to open and re-engage gear rack 76 so that piston 80 can be advanced further by depressing trigger 54 once again. Rack 76 is integrally attached to piston rod 79 so that its movement is transmitted to piston 80, thereby extruding thermoplastic material through needle hub 82 and hollow needle 84.

Trigger-operated syringe 50 can be reloaded by depressing spring-loaded lock 86 to release pawl 78 from rack 76. This allows piston rod 78 to be withdrawn by simply pulling rearwardly on knob 88.

In addition to being driven by hand, the piston could also be driven mechanically, such as by a spring, or by a motor, pneumatically, hydraulically or by other means.

Those skilled in the art will recognize many equivalents to the specific elements, components, materials and steps described herein. Such equivalents are intended to be covered by the following claims.

**Claims**

1. A dental syringe assembly having a hollow syringe (10; 50) for holding a supply of thermoplastic material, an electrical heater (28, 34; 140, 42; 66, 68) carried by the syringe for heating and softening the thermoplastic material in the syringe, and a plunger (16; 80) within the syringe for injecting the heated thermoplastic material through a nozzle (38; 84) adjacent the heater into a dental cavity, characterized in that:

said nozzle is a thin-walled elongated, tubular needle (38; 84) having a length of at least about 2.5 cm and an outer diameter within the range of diameters from that of an 18 gauge needle to that of a 30 gauge needle, fabricated from a material having a coefficient of thermal conductivity of at least about 200 Btu/(hr) (ft$^2$) (°F/ft) (4.48632 × 10$^6$ kW/(mK)), the needle being manually malleable, removably connected to the syringe, and suitable for insertion into a root canal cavity to inject thermoplastic material into the root canal cavity, and said needle having an end in heat exchange relationship with said heater (28, 34; 140, 42; 66, 68), the heater providing sufficient heat to heat said end of said needle to a temperature which is sufficient to maintain the entire length of said needle at above about 110°C at which said thermoplastic material will flow but below the temperature at which the material is thermally decomposed.

2. A dental syringe assembly as claimed in claim 1 wherein said electrical heater (28, 34; 140, 42; 66, 68) is a separate hollow heater section a first end of which is removably connected to and communicating with the syringe (10; 50) and a second end of which is removably connected to and communicating with a needle hub (40; 82).

3. A dental syringe assembly as claimed in claim 2 further comprising a thermally insulating washer (33) positioned between the heater body and the syringe (10; 50).

4. A dental syringe assembly as claimed in claim 1 wherein the needle (38; 84) is joined to the electrical heater (28, 34; 140, 42; 66, 68) by a hub (40; 82), the hub being fabricated from a material having a high thermal conductivity.

5. A dental syringe assembly as claimed in claim 1 wherein the plunger (80) is trigger operated.

6. A dental syringe assembly as claimed in claim 1 wherein the needle (38; 84) is formed of silver or copper.

## Patentansprüche

1. Zahnärztliche Spritze mit einem hohlen Spritzenkörper (10, 50) zur Aufnahme eines Vorrats an thermoplastischem Material, einer auf dem Spritzenkörper angebrachten elektrischen Heizvorrichtung (28, 34; 140, 42; 66, 68) zum Erhitzen und Erweichen des thermoplastischen Materials im Spritzenkörper, und einem Druckkolben (16; 80) zum Ausspritzen des erhitzten thermoplastischen Materials durch eine der Heizvorrichtung benachbarte Düse (38; 84) in eine Zahnhöhlung, dadurch gekennzeichnet, daß

die Düse von einer dünnwandigen, langgestreckten, rohrförmigen Nadel (38; 84) gebildet ist, die eine Länge von mindestens etwa 2.5 cm und einen äußeren Durchmesser in Durchmesserbereich von 18 bis 30 Gauges aufweist, die aus einem Material mit Wärmeleitkoeffizienten von mindestens etwa 200 Btu/(hr) (ft$^2$) (°F/ft) (4.48632 × 10$^6$ KW/mK) hergestellt ist, die manuell verformbar, mit dem Spritzenkörper abnehmbar verbunden und zum Einführen in einen Zahnwurzelkanal für ein Einspritzen von thermoplastischem Material in Zahnwurzelkanäle geeignet ist, und die in einem Wärmeaustauschverhältnis mit der Heizvorrichtung (28, 34; 140, 42; 66, 68) steht, wobei die Heizvorrichtung genügend Wärme zum Erhitzen des Endes der Nadel auf eine Temperatur zur Verfügung stellt, die ausreicht, um die gesamte Länge der Nadel auf einer Temperatur oberhalb von etwa 110°, bei der das thermoplastische Material flüssig wird, aber unterhalb der Temperatur zu halten, bei der sich das Material nicht zersetzt.

2. Zahnärztliche Spritze nach Anspruch 1, bei der die elektrische Heizvorrichtung (28, 34; 140, 42; 66, 68) als separater, hohler Heizabschnitt ausgebildet ist, dessen erstes Ende abnehmbar mit dem Spritzenkörper (10; 50) verbunden ist und mit diesem in Verbindung steht, und dessen zweites Ende lösbar mit einer Nabelnabe (40; 82) verbunden ist und mit dieser in Verbindung steht.

3. Zahnärztliche Spritze nach Anspruch 2, ferner umfassend eine thermisch isolierte Scheibe (33), die zwischen der Heizvorrichtung und dem Spritzenkörper (10; 50) angeordnet ist.

4. Zahnärztliche Spritze nach Anspruch 1, bei der die Nadel (38; 84) durch ein aus einem Material mit Wärmeleitfähigkeit hergestellten Nabe (40; 82) mit der elektrischen Heizvorrichtung (28, 34; 140, 42; 66, 68) verbunden ist.

5. Zahnärztliche Spritze nach Anspruch 1, dadurch gekennzeichnet, daß der Druckkolben (80) durch eine Abzugsvorrichtung betätigbar ist.

6. Zahnärztliche Spritze nach Anspruch 1, bei der die Nadel (38; 84) aus Silber oder Kupfer geformt ist.

## Revendications

1. Assemblage de seringue dentaire comprenant une seringue creuse (10; 50) pour contenir une réserve d'une matière thermoplastique, un dispositif de chauffage électrique (28, 34; 140, 42; 66, 68) porté par la seringue pour chauffer et ramollir la matière thermoplastique dans la seringue, et un piston (16; 80) dans la seringue pour injecter la matière thermoplastique chauffée à travers une buse (38; 84) adjacent au dispositif de chauffage dans une cavité dentaire, caractérisé en ce que la buse est une aiguille (38; 84) tubulaire, allongée, à paroi mince ayant une longueur d'au moins environ 2,5 cm et un diamètre extérieur dans la bande de diamètres de celui d'une aiguille du calibre 18 (18 gauge) à celui d'une aiguille du calibre 30 (30 gauge), fabriquée en une matière ayant un coefficient de conduction thermique d'au moins environ 200 Btu(hr) (ft$^2$) (°F/ft) (4.48632 × 10$^6$ kW/(mK)), l'aiguille étant malléable manuellement, connectée de façon amovible à la seringue et appropriée pour être insérée dans la cavité du canal de la racine pour injecter de la matière thermoplastique dans la cavité du canal de la racine et en ce que ladite aiguille a une extrémité exposée en échange thermique avec le dispositif de chauffage (28, 34; 140, 42; 66, 68), le dispositif de chauffage fournissant suffisamment de chaleur pour chauffer ladite extrémité de ladite aiguille à une température qui est suffisante pour maintenir la longeur entière de ladite aiguille à une température au-dessus environ 110°C à laquelle ladite matière thermoplastique coulera, mais inférieure à la température à laquelle ladite matière est décomposée par la chaleur.

2. Assemblage de seringue dentaire selon la revendication 1, dans lequel le dispositif de chauffage électrique (28, 34; 140, 42; 66, 68) est une section distincte, creuse de chauffage dont une première extrémité est connectée de façon amovible à et communique avec la seringue (10; 50) et dont une seconde extrémité est connectée de façon amovible à et communique avec un moyen de connection (40; 82) de l'aiguille.

3. Assemblage de seringue dentaire selon la revendication 2, comprenant en outre une rondelle d'isolation thermique (3) placée entre le corps du dispositif de chauffage et la seringue (10; 50).

4. Assemblage de seringue dentaire selon la revendication 1, dans lequel l'aiguille (38; 84) est connectée au dispositif de chauffage électrique (28, 34; 140, 42; 66, 68) par un dispositif de connection (40; 82), le dispositif de connection étant fabriqué à partir d'une matière ayant une conductivité thermique élevée.

5. Assemblage de seringue dentaire selon la revendication 1, dans lequel le piston (80) est actionné à l'aide d'une gâchette.

6. Assemblage de seringue dentaire selon la revendication 1, dans lequel l'aiguille (38; 84) est faite d'argent ou de cuivre.

FIG. 1.

FIG. 2.

FIG. 4.

FIG. 3.